# EUROPEAN PATENT APPLICATION

(11) **EP 3 982 516 A1**
(43) Date of publication of application: **13.04.2022**
(21) Application number: 21201205.8
(22) Date of filing: 06.10.2021
(51) Int. Cl.: H02K 3/26, H02K 3/47

(54) **COIL SUBSTRATE, MOTOR COIL SUBSTRATE, AND MOTOR**

(30) Priority: 09.10.2020 JP 2020171255
(71) Applicant: Ibiden Co., Ltd., Ogaki-shi, Gifu 503-0917 (JP)
(72) Inventor: Morita, Haruhiko, Ogaki-shi (JP); Miwa, Hitoshi, Ogaki-shi (JP); Kato, Shinobu, Ogaki-shi (JP); Yokomaku, Toshihiko, Ogaki-shi (JP); Kato, Hisashi, Ogaki-shi (JP); Hirasawa, Takahisa, Ogaki-shi (JP); Muraki, Tetsuya, Ogaki-shi (JP); Furuno, Takayuki, Ogaki-shi (JP)
(74) Representative: Grünecker Patent- und Rechtsanwälte PartG mbB

(57) **Abstract**

A coil substrate includes a flexible substrate having a first end and a second end, and coils formed on the substrate such that the coils extend from the first end to the second end of the substrate. The coils are formed such that each coil includes a center space and a wiring formed around the center space, each coil is formed such that the wiring includes one or more first wirings, one or more second wirings facing the first wiring(s) via the center space, and one or more third wirings connecting the first and second wiring(s) and that the first wiring(s) is positioned closer to the first end than the second wiring(s), and the wiring in each coil is formed such that a width w1 of the first wiring(s), a width w2 of the second wiring(s), and a width w3 of the third wiring(s) are substantially equal to each other.

## Description

### CROSS-REFERENCE TO RELATED APPLICATIONS

The present application is based upon and claims the benefit of priority to Japanese Patent Application No. 2020-171255, filed October 9, 2020, the entire contents of which are incorporated herein by reference.

### BACKGROUND OF THE INVENTION

### Field of the Invention

The present invention relates to a coil substrate, a motor coil substrate, and a motor.

### Description of Background Art

Japanese Patent Application Laid-Open Publication No. 2020-43711 describes a motor coil substrate. The entire contents of this publication are incorporated herein by reference.

### SUMMARY OF THE INVENTION

According to one aspect of the present invention, a coil substrate includes a flexible substrate having a first end and a second end on the opposite side with respect to the first end, and coils formed on the flexible substrate such that the coils extend from the first end of the flexible substrate to the second end of the flexible substrate. The coils are formed such that each of the coils includes a center space and a wiring formed around the center space, each of the coils is formed such that the wiring includes one or more first wirings, one or more second wirings facing the first wiring(s) via the center space, and one or more third wirings connecting the first wiring(s) and the second wiring(s) and that the first wiring(s) is positioned closer to the first end than the second wiring(s), and the wiring in each of the coils is formed such that a width w1 of the first wiring(s), a width w2 of the second wiring(s), and a width w3 of the third wiring(s) are substantially equal to each other.

### BRIEF DESCRIPTION OF THE DRAWINGS

A more complete appreciation of the invention and many of the attendant advantages thereof will be readily obtained as the same becomes better understood by reference to the following detailed description when considered in connection with the accompanying drawings, wherein:
Fig. 1A is a schematic diagram of a motor according to an embodiment of the present invention;
Fig. 1B is a schematic diagram of a motor coil substrate according to an embodiment of the present invention;
Fig. 1C illustrates a coil of a reference example;
Fig. 2A illustrates a coil substrate according to an embodiment of the present invention;
Fig. 2B illustrates a cross section between a point (E) and a point (F) in Fig. 2A;
Fig. 2C illustrates a cross section between a point (G) and a point (H) in Fig. 2A;
Fig. 3A illustrates a coil according to an embodiment of the present invention;
Fig. 3B illustrates a cross section between a point (A) and a point (B) in Fig. 3A;
Fig. 3C illustrates a cross section between a point (C) and a point (D) in Fig. 3A; and
Fig. 3D illustrate a coil according to an embodiment of the present invention.

### DETAILED DESCRIPTION OF THE EMBODIMENTS

Embodiments will now be described with reference to the accompanying drawings, wherein like reference numerals designate corresponding or identical elements throughout the various drawings.

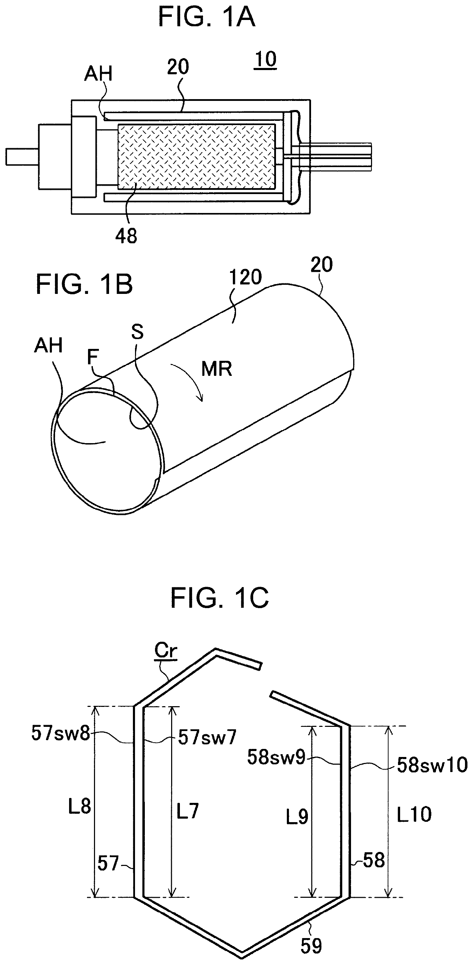

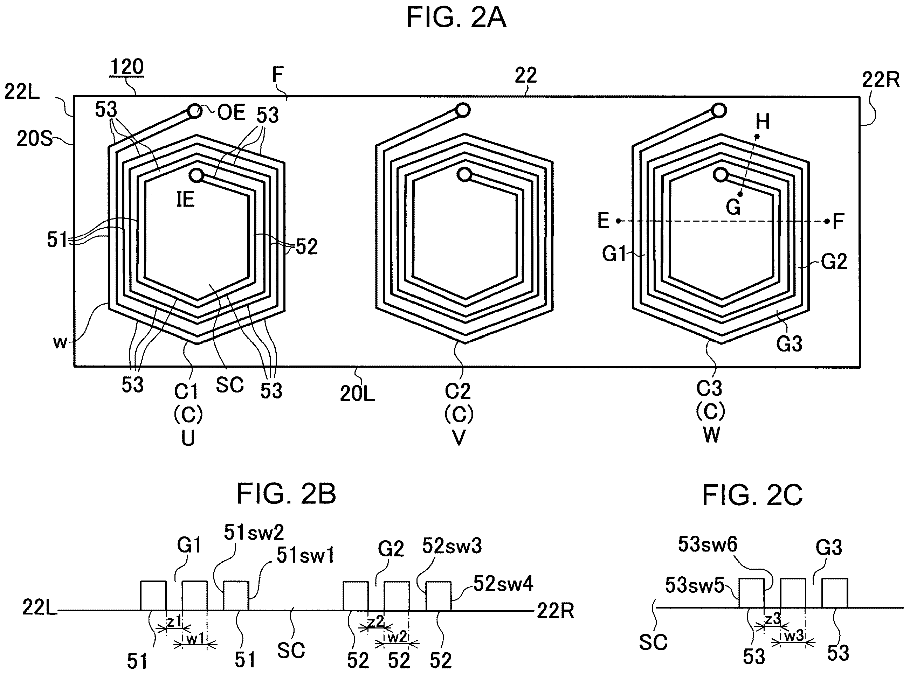

A coil substrate 120 illustrated in Fig. 2A is prepared. The coil substrate 120 is formed of: a flexible substrate 22 having a first surface (F) and a second surface (S) on the opposite side with respect to the first surface (F); and coils (C) (C1, C2, C3) on the first surface (F) of the flexible substrate 22. By winding the coil substrate 120, a motor coil substrate 20 illustrated in Fig. 1B is obtained. The motor coil substrate 20 is wound around a hollow space (AH). For example, the motor coil substrate 20 has a tubular shape. The number of windings (N) is 1 or more and 6 or less. Fig. 1B is a schematic diagram.

As illustrated in Fig. 1A, a motor 10 is obtained by positioning a magnet 48 inside the motor coil substrate 20. Fig. 1A is a schematic diagram. The motor coil substrate 20 is positioned around the magnet 48 via the hollow space (AH). An example of the motor 10 is a three-phase motor. In the embodiment, the magnet 48 rotates. However, it is also possible that the motor coil substrate 20 rotates. A rotation direction (MR) of the motor 10 is illustrated in Fig. 1B.

As illustrated in Fig. 2A, the flexible substrate 22 has a short side (20S) and a long side (20L). The flexible substrate 22 has a substantially rectangular planar shape. The flexible substrate 22 has one end (22L) and the other end (22R) on the opposite side with respect to the one end (22L). The coils (C) (C1, C2, C3) are formed along the long sides (20L) of the flexible substrate 22. The coils (C) are formed substantially in one row from the one end (22L) to the other end (22R) of the flexible substrate 22. The number of the coils (C) is M (number (M)). In the example of Fig. 2A, the number of the coils is 3.

The multiple coils (C) formed on the flexible substrate 22 are simultaneously formed. For example, the multiple coils (C) are formed on the flexible substrate 22 using a common alignment mark. Therefore, positions of the coils (C) are related to each other.

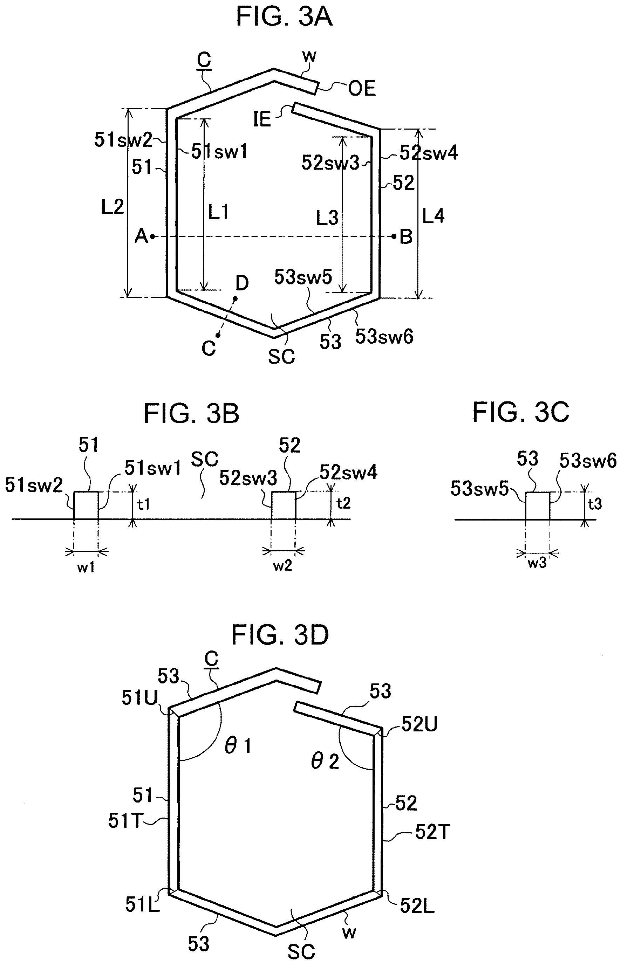

Fig. 3A illustrates an example of a coil (C) of the embodiment. The number of turns of the coil (C) of Fig. 3A is 1. The coil (C) is formed of a center space (SC) and a wiring (w) formed around the center space (SC). The wiring (w) has an outer end (OE) and an inner end (IE). The wiring (w) is formed between the outer end (OE) and the inner end (IE). As illustrated in Fig. 3A, the coil (C) has a substantially hexagonal planar shape.

The wiring (w) includes a first wiring 51 and a second wiring 52 that face each other via the center space (SC). The first wiring 51 and the second wiring 52 are substantially parallel to each other. The first wiring 51 and the second wiring 52 extend straight. In one coil (C), the first wiring 51 is close to the one end (22L) and the second wiring 52 is close to the other end (22R). When the motor 10 is manufactured using the coil substrate 120 of the embodiment, an angle between the rotation direction (MR) of the motor and the first wiring 51 is substantially 90 degrees. The wiring (w) further includes a third wiring 53 that connects the first wiring 51 and the second wiring 52. The third wiring 53 is bent midway. The third wiring 53 is bent at a midpoint. The wiring (w) is formed by connecting the first wiring 51, the second wiring 52, and the third wiring 53.

A cross section between a point (A) and a point (B) in Fig. 3A is illustrated in Fig. 3B. A straight line (AB) containing the point (A) and the point (B) and the rotation direction (MR) are substantially parallel to each other. The first wiring 51 has a first side wall (51sw1) and a second side wall (51sw2) on the opposite side with respect to the first side wall (51sw1). Among the first side wall (51sw1) and the second side wall (51sw2), the first side wall (51sw1) is close to the center space (SC) and the second side wall (51sw2) is close to the one end (22L). The second wiring 52 has a third side wall (52sw3) and a fourth side wall (52sw4) on the opposite side with respect to the third side wall (52sw3). Among the third side wall (52sw3) and the fourth side wall (52sw4), the third side wall (52sw3) is close to the center space (SC) and the fourth side wall (52sw4) is close to the other end (22R). The first wiring 51 has a width (first width) (w1). The second wiring 52 has a width (second width) (w2). The first width (w1) is a distance between the first side wall (51sw1) and the second side wall (51sw2). The second width (w2) is a distance between the third side wall (52sw3) and the fourth side wall (52sw4).

A cross section between a point (C) and a point (D) in Fig. 3A is illustrated in Fig. 3C. An angle between a straight line (CD) with the point (C) and the point (D) and side walls of the third wiring 53 is substantially 90 degrees. The third wiring 53 has a fifth side wall (53sw5) and a sixth side wall (53sw6) on the opposite side with respect to the fifth side wall (53sw5). Among the fifth side wall (53sw5) and the sixth side wall (53sw6), the fifth side wall (53sw5) is close to the center space (SC). The third wiring 53 has a width (third width) (w3). The third width (w3) is a distance between the fifth side wall (53sw5) and the sixth side wall (53sw6).

In the coil substrate 120 of the embodiment, the first width (w1), the second width (w2), and the third width (w3) are substantially equal to each other. Therefore, resistance of the coil (C) can be reduced. Efficiency of the motor 10 can be increased.

In the coil substrate 120 of the embodiment, a thickness (t1) of the first wiring 51, a thickness (t2) of the second wiring 52, and a thickness (t3) of the third wiring 53 are substantially equal to each other. Therefore, a cross-sectional area of the first wiring 51, a cross-sectional area of the second wiring 52, and a cross-sectional area of the third wiring 53 are substantially equal to each other. One of the first wiring 51, the second wiring 52, and the third wiring 53 does not become a bottleneck. A magnitude of an allowable current of the first wiring 51, a magnitude of an allowable current of the second wiring 52, and a magnitude of an allowable current of the third wiring 53 can be made substantially equal to each other. A highly efficient motor 10 can be provided.

In the embodiment, an angle between a direction of a current flowing through the first wiring 51 and the rotation direction (MR) of the motor 10 is substantially 90 degrees. An angle between a direction of a current flowing through the second wiring 52 and the rotation direction (MR) of the motor 10 is substantially 90 degrees. And, a length (second length) (L2) of the second side wall (51sw2) is longer than a length (first length) (L1) of the first side wall (51sw1). A length (fourth length) (L4) of the fourth side wall (52sw4) is longer than a length (third length) (L3) of the third side wall (52sw3).

Fig. 1C illustrates a coil (Cr) of a reference example. The coil (Cr) of the reference example is formed of a seventh wiring 57, an eighth wiring 58, and a ninth wiring 59 connecting the seventh wiring 57 and the eighth wiring 58. The coil (Cr) has a substantially hexagonal planar shape. The seventh wiring 57 has a seventh side wall (57sw7) and an eighth side wall (57sw8) on the opposite side with respect to the seventh side wall (57sw7). The seventh side wall (57sw7) has a length (seventh length) (L7). The eighth side wall (57sw8) has an eighth length (L8). The length (L7) and the length (L8) are equal to each other. The eighth wiring 58 has a ninth side wall (58sw9) and a tenth side wall (58sw10) on the opposite side with respect to the ninth side wall (58sw9). The ninth side wall (58sw9) has a length (ninth length) (L9). The tenth side wall (58sw10) has a length (tenth length) (L10). The length (L9) and the length (L10) are equal to each other.

When the coil (Cr) of the reference example is used for the motor coil substrate, an angle between a direction of a current flowing through the seventh wiring 57 and the rotation direction (MR) of the motor 10 is substantially 90 degrees. An angle between a direction of a current flowing through the eighth wiring 58 and the rotation direction (MR) of the motor 10 is substantially 90 degrees.

A current flowing perpendicular to the rotation direction (MR) of the motor 10 affects a torque of the motor 10. When the coil (C) of the embodiment and the coil (Cr) of the reference example have the same size, the first length (L1) and the seventh length (L7) are equal to each other. The third length (L3) and the ninth length (L9) are equal to each other. The second length (L2) is longer than the eighth length (L8). The fourth length L4 is longer than the tenth length (L10). Therefore, when the embodiment and the reference example are compared regarding a length of a current flowing perpendicular to the rotation direction (MR), the length of the embodiment is longer than the length of the reference example. Therefore, the embodiment can provide a motor 10 having a large torque.

Fig. 3D illustrates a coil (C) of the embodiment. As illustrated in Fig. 3D, the wiring (w) is bent at boundaries (51U, 51L) between the first wiring 51 and the third wiring 53 such that an angle (θ1) between the first wiring 51 and the third wiring 53 is larger than 90 degrees. The wiring (w) is bent at boundaries (52U, 52L) between the second wiring 52 and the third wiring 53 such that an angle (θ2) between the second wiring 52 and the third wiring 53 is larger than 90 degrees. Further, the width (w1) of the first wiring, the width (w2) of the second wiring, and the width (w3 of the third wiring) are equal to each other. Therefore, the second length (L2) can be made longer than the first length (L1). The fourth length (L4) can be made longer than the third length (L3). As a result, the torque of the motor 10 can be increased. Efficiency of the motor 10 can be increased.

As illustrated in Fig. 3D, an upper surface (51T) of the first wiring 51 has a substantially trapezoidal shape. An upper surface (52T) of the second wiring 52 has a substantially trapezoidal shape.

Another example of a coil (C) is illustrated in Fig. 2A. The number of turns of the coil (C) of the other example is 2 or more. The coil (C) of Fig. 2A and the coil (C) of Fig. 3A are different in the number of turns. Except for the number of turns, the coil (C) of Fig. 2A and the coil (C) of Fig. 3A are the same. The coil (C) of the other example is formed of a center space (SC) and a wiring (w) surrounding the center space (SC). Since the number of turns is 2 or more, there is a first wiring 51 for each turn. There is a second wiring 52 for each turn. There is a third wiring 53 for each turn. The first wirings 51 are formed substantially parallel to each other. The second wirings 52 are formed substantially parallel to each other. The first wirings 51 and the second wirings 52 are formed substantially parallel to each other.

When the motor 10 is manufactured using the coil substrate 120 including the coils (C) of the other example, an angle between the rotation direction (MR) of the motor illustrated in Fig. 1B and the first wirings 51 is substantially 90 degrees.

Fig. 2B illustrates a cross section between a point (E) and a point (F) in Fig. 2A. A straight line containing the point (E) and the point (F) is parallel to the rotation direction (MR). Fig. 2C illustrates a cross section between a point (G) and a point (H) in Fig. 2A. An angle between a straight line containing the point (G) and the point (H) and the fifth side wall (53sw5) is 90 degrees. The number of turns of the coil (C) of the another example is 2 or more. Therefore, as illustrated in Figs. 2A, 2B,and 2C, the coil (C) of the another example has gaps (G1, G2, G3) between wirings (w) that form adjacent turns. The gap between adjacent first wirings 51 is the first gap (G1). The gap between adjacent second wirings 52 is the second gap (G2). The gap between adjacent third wirings 53 is the third gap (G3). A distance (z1) of the first gap (G1), a distance (z2) of the second gap (G2), and a distance (z3) of the third gap (G3) are substantially equal to each other.

The first coil (C1) is a U-phase coil, the second coil (C2) is a V-phase coil, and the third coil (C3) is a W-phase coil. The coil substrate 120 illustrated in Fig. 2A is a coil substrate 120 for a three-phase motor.

The motor coil substrate 20 of the embodiment is formed by winding the coil substrate 120 having multiple coils (C).

Fig. 2 of Japanese Patent Application Laid-Open Publication No. 2020-43711 illustrates a wiring of a coil. According to Fig. 2 of Japanese Patent Application Laid-Open Publication No. 2020-43711, W1 is smaller than W2, and W3 is smaller than W4. In this way, the coil of Japanese Patent Application Laid-Open Publication No. 2020-43711 has a thin wiring. Therefore, it is expected that the coil of Japanese Patent Application Laid-Open Publication No. 2020-43711 has a high resistance.

A coil substrate according to an embodiment of the present invention includes: a flexible substrate that has one end and the other end on the opposite side with respect to the one end; and multiple coils that are formed on the flexible substrate and are positioned from the one end to the other end. The coils are each formed of a center space and a wiring surrounding the center space. The wiring includes a first wiring, a second wiring, and a third wiring. The first wiring and the second wiring face each other via the center space. The third wiring connects the first wiring and the second wiring. Among the first wiring and the second wiring, the first wiring is close to the one end. A width (w1) of the first wiring, a width (w2) of the second wiring, and a width (w3) of the third wiring are substantially equal to each other.

A magnitude of an allowable current differs between a thick wiring and a thin wiring. The coil of Patent Document 1 has a thin wiring and a thick wiring. Therefore, when the coil of Patent Document 1 is used for a motor, it is considered that a defect due to the thin wiring occurs. According to the coil substrate of an embodiment of the present invention, the width (w1) of the first wiring, the width (w2) of the second wiring, and the width (w3) of the third wiring are substantially equal to each other. Therefore, a defect due to a thin wiring does not occur. Or, a defect due to a thin wiring is unlikely to occur. According to the embodiment, resistance of the coils can be reduced. Efficiency of the motor can be increased.

The first wiring has a first side wall and a second side wall. The second side wall faces an outer side of the coil. The second wiring has a third side wall and a fourth side wall. The fourth side wall faces an outer side of the coil. An angle between the first wiring and a rotation direction of the motor is substantially 90 degrees. An angle between the second wiring and the rotation direction of the motor is substantially 90 degrees. And, a length of the second side wall is larger than a length of the first side wall. A length of the fourth side wall is longer than a length of the third side wall. As a result, the motor of the embodiment can generate a high torque. The efficiency of the motor can be increased.

Obviously, numerous modifications and variations of the present invention are possible in light of the above teachings. It is therefore to be understood that within the scope of the appended claims, the invention may be practiced otherwise than as specifically described herein.

## Claims

1. A coil substrate, comprising:
a flexible substrate having a first end and a second end on an opposite side with respect to the first end; and
a plurality of coils formed on the flexible substrate such that the plurality of coils extends from the first end of the flexible substrate to the second end of the flexible substrate,
wherein the plurality of coils is formed such that each of the coils includes a center space and a wiring formed around the center space, each of the coils is formed such that the wiring includes at least one first wiring, at least one second wiring facing the at least one first wiring via the center space, and at least one third wiring connecting the at least one first wiring and the at least one second wiring and that the at least one first wiring is positioned closer to the first end than the at least one second wiring, and the wiring in each of the coils is formed such that a width w1 of the at least one first wiring, a width w2 of the at least one second wiring, and a width w3 of the at least one third wiring are substantially equal to each other.

2. The coil substrate according to claim 1, wherein the at least one first wiring has a first side wall and a second side wall on an opposite side with respect to the first side wall such that the first side wall is positioned closer to the center space than the second side wall, that the width w1 is a distance between the first side wall and the second side wall, and that a length of the second side wall is longer than a length of the first side wall, and the at least one second wiring has a third side wall and a fourth side wall on an opposite side with respect to the third side wall such that the third side wall is positioned closer to the center space than the fourth side wall, that the width w2 is a distance between the third side wall and the fourth side wall, and that a length of the fourth side wall is longer than a length of the third side wall.

3. The coil substrate according to claim 2, wherein the wiring in each of the coils is bent at a boundary between the at least one first wiring and the at least one third wiring such that an angle between the at least one first wiring and the at least one third wiring is greater than 90 degrees, and the wiring in each of the coils is bent at a boundary between the at least one second wiring and the at least one third wiring such that an angle between the at least one second wiring and the at least one third wiring is greater than 90 degrees.

4. The coil substrate according to claim 2, wherein the wiring in each of the coils is formed in a spiral shape such that the at least one first wiring comprises a plurality of first wirings, that the at least one second wiring comprises a plurality of second wirings, and that the at least one third wiring comprises a plurality of third wirings.

5. The coil substrate according to claim 4, wherein the wiring in each of the coils is formed such that the first wirings are formed substantially parallel to each other, that the second wirings are formed substantially parallel to each other, and that the first wirings and the second wirings are formed substantially parallel to each other.

6. The coil substrate according to claim 4, wherein the wiring in each of the coils is formed such that a distance of a gap between adjacent wirings of the first wirings, a distance of a gap between adjacent wirings of the second wirings, and a distance of a gap between adjacent wirings of the third wirings are substantially equal to each other.

7. The coil substrate according to claim 1, wherein the plurality of coils includes a U-phase coil, a V-phase coil, and a W-phase coil such that the U-phase coil, the V-phase coil, and the W-phase coil are formed in an order of the U-phase coil, the V-phase coil, and the W-phase coil.

8. The coil substrate according to claim 3, wherein the at least one third wiring is bent.

9. A motor coil substrate, comprising:
the coil substrate of Claim 1 wound such that the coil substrate is forming a space for a magnet.

10. A motor, comprising:
the motor coil substrate of Claim 9; and
a magnet positioned inside the space formed by the motor coil substrate.

11. The coil substrate according to claim 2, wherein the plurality of coils includes a U-phase coil, a V-phase coil, and a W-phase coil such that the U-phase coil, the V-phase coil, and the W-phase coil are formed in an order of the U-phase coil, the V-phase coil, and the W-phase coil.

12. A motor coil substrate, comprising:
the coil substrate of Claim 2 wound such that the coil substrate is forming a space for a magnet.

13. A motor, comprising:
the motor coil substrate of Claim 12; and
a magnet positioned inside the space formed by the motor coil substrate.

14. The coil substrate according to claim 3, wherein the plurality of coils includes a U-phase coil, a V-phase coil, and a W-phase coil such that the U-phase coil, the V-phase coil, and the W-phase coil are formed in an order of the U-phase coil, the V-phase coil, and the W-phase coil.

15. A motor coil substrate, comprising:
the coil substrate of Claim 3 wound such that the coil substrate is forming a space for a magnet.

16. A motor, comprising:
the motor coil substrate of Claim 15; and
a magnet positioned inside the space formed by the motor coil substrate.

17. The coil substrate according to claim 4, wherein the plurality of coils includes a U-phase coil, a V-phase coil, and a W-phase coil such that the U-phase coil, the V-phase coil, and the W-phase coil are formed in an order of the U-phase coil, the V-phase coil, and the W-phase coil.

18. A motor coil substrate, comprising:
the coil substrate of Claim 4 wound such that the coil substrate is forming a space for a magnet.

19. A motor, comprising:
the motor coil substrate of Claim 18; and
a magnet positioned inside the space formed by the motor coil substrate.

20. The coil substrate according to claim 5, wherein the plurality of coils includes a U-phase coil, a V-phase coil, and a W-phase coil such that the U-phase coil, the V-phase coil, and the W-phase coil are formed in an order of the U-phase coil, the V-phase coil, and the W-phase coil.
